# EUROPÄISCHE PATENTANMELDUNG

(11) **EP 2 999 096 A2**
(43) Veröffentlichungstag der Anmeldung: **23.03.2016**
(21) Anmeldenummer: 15185377.7
(22) Anmeldetag: 16.09.2015
(51) Int. Cl.: H02K 7/08, H02K 11/00

(54) **ANTRIEBSANORDNUNG**

(30) Priorität: 21.09.2014 DE 102014013652
(71) Anmelder: Hanning Elektro-Werke GmbH & Co. KG, 33813 Oerlinghausen (DE)
(72) Erfinder: Buchalla, Harald, 59494 Soest (DE)
(74) Vertreter: Wickord, Wiro

(57) **Zusammenfassung**

Die Erfindung betrifft eine Textilmaschine mit wenigstens einer Antriebsanordnung umfassend einen rotatorisch wirksamen elektrischen Antriebsmotor mit einem jedenfalls abschnittsweise von einem Gehäuse des Antriebsmotors umfassten Stator, welcher wenigstens eine Wicklung aufweist, mit einem an einer Welle des Antriebsmotors drehbar in Bezug zum Stator gehaltenen Rotor und mit mindestens einem Lager für die Welle, umfassend elastische Mittel zum Stützen von wenigstens einzelnen Funktionskomponenten des Antriebsmotors und umfassend ein dem Antriebsmotor zugeordnetes dezentrales Kontrollmodul, welches mit dem Antriebsmotor einerseits und mit mindestens einem Sensor der Antriebsanordnung andererseits zusammenwirkt und welches Mittel zur Kommunikation mit einer übergeordneten Zentralkontrolleinrichtung aufweist, wobei mindestens ein zum Stützen der Welle vorgesehenes Lager über die elastischen Mittel nachgiebig in Bezug zu dem Stator an dem Gehäuse abgestützt ist derart, dass die Welle mit den Rotor relativ zu dem Stator beweglich gehalten ist, dass als Antriebsmotor ein elektrischer Synchronmotor vorgesehen ist und dass über einen ersten Sensor eine Position der Welle relativ zu dem Gehäuse und/oder über einen zweiten Sensor ein Drehwinkel der Welle erfassbar sind.

## Beschreibung

Die Erfindung betrifft eine Textilmaschine mit wenigstens einer Antriebsanordnung umfassend einen rotatorisch wirksamen elektrischen Antriebsmotor mit einem jedenfalls abschnittsweise von einem Gehäuse des Antriebsmotors umfassten Stator, welcher wenigstens eine Wicklung aufweist, mit einem an einer Welle des Antriebsmotors drehbar in Bezug zum Stator gehaltenen Rotor und mit mindestens einem Lager für die Welle, umfassend elastische Mittel zum Stützen von wenigstens einzelnen Funktionskomponenten des Antriebsmotors und umfassend ein dem Antriebsmotor zugeordnetes dezentrales Kontrollmodul, welches mit dem Antriebsmotor einerseits und mit mindestens einem Sensor der Antriebsanordnung andererseits zusammenwirkt und welches Mittel zur Kommunikation mit einer übergeordneten Zentralkontrolleinrichtung aufweist.

Eine Textilmaschine umfasst heute typischerweise eine Mehrzahl von Antriebsanordnungen mit je einem rotatorisch wirksamen elektrischen Antriebsmotor, welcher über einen endseits einer Welle des Antriebsmotors vorgesehenen Manipulator, beispielsweise ausgestattet in Form einer Führungsrolle, auf einen Faden, eine Faser, ein Vlies oder ein Gewirk einwirkt. Weiter sind typischerweise verschiedene externe Sensoren vorgesehen, welche insbesondere zur Erfassung einer Lage des Fadens, der Faser, des Vlieses oder des Gewirks dienen, sowie zusätzliche Aktorikelemente. Die zusätzlichen Aktorikelemente dienen beispielsweise zum Vorspannen oder Positionieren des Faden, der Faser, des Gewirks beziehungsweise des Vlieses. Der rotatorisch wirksame elektrische Antriebsmotor wird üblicherweise insgesamt elastisch gelagert vorgesehen, um die Antriebsanordnung zum einen vor Resonanzproblemen zu schützen und um zum anderen auch bei hohen Drehzahlen eine ausreichende Laufruhe und Lebensdauer zu gewährleisten. Für die Steuerung beziehungsweise Regelung des elektrischen Antriebsmotors ist ein dezentrales Kontrollmodul vorgesehen. Das dezentrale Kontrollmodul, welches funktional und üblicherweise auch räumlich als Teil der Antriebsanordnung vorgesehen ist, wirkt überdies mit den externen Sensoren und den zusätzlichen Aktorikelementen zusammen. Das dezentrale Kontrollmodul ist über geeignete Kommunikationsmittel mit einer übergeordneten Zentralkontrolleinrichtung verbunden. Die Zentralkontrolleinrichtung koordiniert insbesondere eine Mehrzahl von Antriebsanordnungen der Textilmaschine. Grundsätzlich hat sich die Verwendung derartiger Antriebsanordnungen in Textilmaschinen über viele Jahre bewährt. Gleichwohl sind die verteilt ausgeführten Systeme vergleichsweise groß, teuer und hinsichtlich Montage und Wartung aufwendig.

Aufgabe der vorliegenden Erfindung ist es insofern, eine Textilmaschine mit wenigstens einer Antriebsanordnung anzugeben, welche kompakt baut, Kostenvorteile bietet und in Bezug auf die Installation und Wartung vorteilhaft ausgestattet ist.

Zur Lösung der Aufgabe ist die Erfindung in Verbindung mit dem Oberbegriff des Patentanspruchs 1 dadurch gekennzeichnet, dass mindestens ein zum Stützen der Welle vorgesehenes Lager über die elastischen Mittel nachgiebig in Bezug zu dem Stator an dem Gehäuse abgestützt ist derart, dass die Welle mit den Rotor relativ zu dem Stator beweglich gehalten ist, dass als Antriebsmotor ein elektrischer Synchronmotor vorgesehen ist und dass über einen ersten Sensor eine Position der Welle relativ zu dem Gehäuse und/oder über einen zweiten Sensor ein Drehwinkel der Welle erfassbar sind.

Der besondere Vorteil der erfindungsgemäßen Antriebsanordnung besteht in ihrem integrierten Aufbau und der daraus resultierenden kompakten Bauform. Insbesondere sind die elastischen Mittel in dem Gehäuse des Synchronmotors integriert vorgesehen. Das mindestens eine die Welle stützende Lager ist hierbei beispielsweise über Feder-Dämpfungs-Elemente oder Elastomerelemente entkoppelt zum Gehäuse vorgesehen. Hierdurch ergibt sich eine relative Beweglichkeit der Welle mit dem darangehaltenen Rotor in Bezug auf den von dem Gehäuse umfassten Stator. Die interne Bewegungsfähigkeit erlaubt es, mittels der Antriebsanordnung selbst den Faden zu bewegen, die Fadenkraft beziehungsweise Fadenspannung zu beeinflussen, die Fadenkraft beziehungsweise Fadenspannung sensorlos zu erfassen beziehungsweise Schwingungen des Fadens entgegenzuwirken. In ähnlicher Weise kann auf Fasern, Vliese beziehungsweise Gewirke eingewirkt werden. Die zusätzlichen Aktorikelemente, welche beispielsweise zum Vorspannen oder Positionieren des Fadens, der Faser, des Gewirks beziehungsweise des Vlieses vorgesehen werden, können hinsichtlich ihrer Anzahl reduziert werden, weniger komplex ausgeführt werden oder sind vollständig entbehrlich. Ferner bietet die relative Beweglichkeit von Welle und Stator die Möglichkeit, die Laufruhe der Antriebsanordnung weiter zu verbessern. Zudem können die elastischen Mittel klein und kompakt ausgeführt werden, da anders als bisher nicht der gesamte elektrische Antrieb zu stützen ist. Vielmehr erfolgt allein die Entkopplung der Welle und des an der Welle vorgesehenen Rotors. Die kompakte Bauform der elastischen Mittel begünstigt hierbei die funktionale und räumliche Integration. Der Stator kann beispielsweise mit einer Wicklung ausgeführt sein, so dass abhängig von den Betriebsparametern und dem Lastfall eine Verkippung beziehungsweise eine Verschiebung der Welle mit dem daran gehaltenen Rotor bewirkt werden kann.

Sensorisch erfasst wird insbesondere eine Position der Welle mit dem daran gehaltenen Rotor relativ zum Gehäuse beziehungsweise ein Drehwinkel der Welle. Das Gehäuse, welches insbesondere ortsfest vorgesehen ist, definiert eine Referenzposition der Antriebsanordnung. Auf externe Sensoren kann demzufolge verzichtet werden. Die kompakte Bauform wird hierdurch weiter begünstigt. Zudem reduziert sich der Installations- beziehungsweise Wartungsaufwand, da eine Justage beziehungsweise Einmessung der Sensoren in Bezug auf den elektrischen Antrieb als Ganzes im Zuge der Inbetriebnahme der Antriebsanordnung entfällt beziehungsweise sich deutlich einfacher gestaltet als bei konventionellen Antriebsanordnungen.

Insbesondere kann das dezentrale Kontrollmodul räumlich integriert und als Antriebsmotor ein elektrischer Synchronmotor vorgesehen werden. Als Mittel zur Kommunikation mit der übergeordneten Zentralkontrolleinrichtung der Textilmaschine können im Zuge einer drahtlosen Datenübertragung beispielsweise Sender- und Empfängerkomponenten oder bei einer kabelgebundenen Datenübertragung Datenleitungen vorgesehen werden. Die Kommunikation kann beispielsweise elektrisch oder optisch erfolgen.

Kern der Erfindung ist demzufolge, die konventionell räumlich und funktional verteilt ausgebildete Antriebsanordnung für Textilmaschinen durch eine kompakte und sowohl funktional als auch räumlich integriert ausgebildete Antriebsanordnung zu ersetzen. Die kompakte Bauform begünstigt insbesondere die Integration der Antriebsanordnung in die Textilmaschine. Eine große Vielzahl von Antriebsanordnungen kann hierbei mit äußerst geringem Abstand in der Textilmaschine verbaut werden. Zudem können verschiedene Funktionskomponenten kostengünstig ausgeführt werden, da beispielsweise kleiner dimensionierte elastische Mittel vorgesehen werden können. Da durch die elastischen Mittel zugleich die Bewegungsfähigkeit der Welle relativ zum Stator erreicht wird, kann bei der Wahl geeigneter Betriebsparameter über die Welle selbst gezielt auf den Faden, die Faser, das Vlies oder das Gewirk eingewirkt werden. Das Textil (Faden, Faser, Vlies, Gewirk und dergleichen) kann so bewegt werden. Eine Kraft beziehungsweise Spannung in dem Textil kann beeinflusst beziehungsweise gemessen und einer unerwünschten Schwingung entgegengewirkt werden. Infolge der räumlichen Integration vereinfacht sich darüber hinaus die Installation und Wartung der Antriebsanordnung.

Nach einer bevorzugten Ausführungsform der Erfindung kann der Stator wenigstens zwei in die Axialrichtung verteilt angeordnete Wicklungen vorsehen. Die wenigstens zwei Wicklungen wirken erfindungsgemäßen derart mit dem dezentralen Kontrollmodul der Antriebsanordnung zusammen, dass für jede Wicklung individuell die Betriebsparameter eingestellt werden können. Beispielsweise kann eine individuelle Spannung aufgeprägt beziehungsweise der Motorstrom individuell eingestellt werden. Es können mittels des derart ausgeführten Stators ein elektrisches Wechselfeld eingeprägt und ein Drehmoment erzeugt werden. Darüber hinaus besteht die Möglichkeit, auf dem sich drehenden Rotor radiale Kraftkomponenten einwirken zu lassen. Hierbei können die radialen Kraftkomponenten für die zwei Wicklungen individuell bestimmt werden. Demzufolge kann über die Kraftkomponenten die relative Position der Welle mit dem Rotor in Bezug auf den Stator beeinflusst werden. Die Welle mit dem Rotor kann insofern relativ zum Stator parallel verschoben, verkippt beziehungsweise zugleich parallel verschoben und gekippt werden.

Die unterschiedlichen Kräfte können beispielsweise durch individuelle Betriebsparameter bewirkt beziehungsweise aufgeprägt werden. Beispielsweise kann der Motorstrom in einer ersten Wicklung unterschiedlich zum Motorstrom in einer zweiten Wicklung ausgebildet sein. Es kann beispielsweise konstruktiv die radiale Kraftkomponente beeinflusst werden, indem bei gleichen Betriebsparametern etwa die Wicklungszahl unterschiedlich ausgeführt ist.

Nach einer Weiterbildung der Erfindung können Mittel zur Erfassung eines Motorstroms vorgesehen sein. Insbesondere kann vorgesehen sein, dass der Motorstrom für eine Mehrzahl von Wicklungen individuell bestimmt wird. Vorteilhaft kann durch die Erfassung des Motorstroms der Betriebszustand der Antriebsanordnung ermittelt beziehungsweise überwacht werden. Beispielsweise kann eine Spannung des Textils über den Motorstrom bestimmt werden, wenn bei einer Vorspannung der Rotor in einer definierten radialen Position vorgesehen ist. Die Fadenspannung kann insofern über den Motorstrom indirekt bestimmt werden. Eines Sensors zur direkten Erfassung der Fadenspannung bedarf es nicht.

Nach einer Weiterbildung der Erfindung ist zum mechanischen Einwirken auf die Faser, den Faden, das Vlies oder das Gewirk ein Manipulator vorgesehen, welcher drehfest an der Welle gehalten ist. Insbesondere ist der Manipulator an einem freien Ende der Welle vorgesehen. Vorteilhaft ergibt sich durch das Festlegen des Manipulators an der Welle eine definierte Relativposition des Textils in Bezug zu der Antriebsanordnung. Der Manipulator kann zu diesem Zweck beispielsweise Führungsmittel, insbesondere Rillen oder Führungskanten aufweisen. Beispielsweise ist der Manipulator nach Art einer Führungsrolle ausgebildet. Die definierte Relativposition des Textils zu der Antriebsanordnung begünstigt den kompakten Aufbau, da auf Positionssensoren zur Erfassung der Lage des Textils verzichtet werden kann. Insbesondere kann auf das Textil durch die Verschiebung beziehungsweise Verdrehung der Welle in definierter Weise eingewirkt werden. Es kann insofern die Fadenspannung vergrößert beziehungsweise reduziert werden. Nach einer Weiterbildung der Erfindung sind die elastischen Mittel dem wenigstens einen Lager in Umfangsrichtung verteilt zugeordnet. Beispielsweise sind die elastischen Mittel ringförmig ausgebildet. Beispielsweise sind dem mindestens einen Lager der Welle mindestens drei in Umfangsrichtung regelmäßig verteilt vorgesehene elastische Mittel zugeordnet. Als elastische Mittel können beispielsweise Elastomerelemente oder Feder-Dämpfungs-Elemente vorgesehen werden. Sofern mehr als ein Lager zum Stützen der Welle vorgesehen ist, können den Lagern entweder gleichartige elastische Mittel oder verschiedenartige elastische Mittel zugeordnet sein. Verschiedenartige elastische Mittel können sich beispielsweise in Bezug auf eine Federkonstante derselben beziehungsweise in Bezug auf ihre Dämpfungseigenschaften unterscheiden. Vorteilhaft bietet sich durch die entsprechend variable Gestaltung der elastischen Mittel die Möglichkeit, die Antriebsanordnung sehr individuell zu betreiben. Beispielsweise kann beim Vorsehen einer einzigen Statorwicklung die Welle mit dem Rotor parallel zum Stator verschoben werden, indem die radiale Kraftkomponente abhängig von den Federkonstanten der den Lagern zugeordneten elastischen Mittel aufgrund der konstruktiven Ausführung des Synchronmotors sich ergebenden Kraft bestimmt werden. Abhängig von der individuellen Gestaltung der Feder-Dämpfungs-Elemente und einer auf das Textil wirksamen Kraft kann zudem die Welle mit dem Rotor in Bezug zum Stator gekippt werden. Mischformen sind durch die Überlagerung der Einflüsse ebenfalls möglich. Sofern zwei unabhängige Wicklungen vorgesehen werden, kann eine individuelle parallele Verschiebung und Kippung der Welle mit dem Rotor relativ zum Stator über eine entsprechende Wahl der Kraftkomponenten bewirkt werden. Die radialen Kraftkomponenten können dabei beispielsweise über den Motorstrom beziehungsweise die Gestaltung der Wicklung beeinflusst werden. Jeweils können die Feder-Dämpfungs-Elemente, welche den Lagern zugeordnet sind, gleichartig oder verschiedenartig ausgebildet sein. Verschiedenartige Feder-Dämpfungs-Elemente können sich in Bezug auf die Federkonstante und/oder die Dämpfungseigenschaften unterscheiden. Die Dämpfungseigenschaften beeinflussen hierbei insbesondere das dynamische Verhalten der Antriebsanordnung.

Sofern in einer Textilmaschine eine Vielzahl erfindungsgemäßer Antriebsanordnungen vorgesehen ist, können die den einzelnen Antriebsanordnungen zugeordneten dezentralen Kontrollmodule datentechnisch mit einer Zentralkontrolleinrichtung der Textilmaschine zusammen arbeiten. Es ergibt sich insofern die Möglichkeit, in koordinierter Weise auf einen gemeinsamen Faden, eine gemeinsame Faser, ein Vlies beziehungsweise ein Gewirk einzuwirken.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigen:
- Figur 1: eine Prinzipdarstellung einer Antriebsanordnung nach dem Stand der Technik,
- Figur 2: eine Prinzipdarstellung einer erfindungsgemäßen Antriebsanordnung,
- Figur 3: eine erste Ausführungsform einer erfindungsgemäßen Antriebsanordnung mit einer einzigen Statorwicklung und
- Figur 4: eine zweite Ausführungsform einer erfindungsgemäßen Antriebsanordnung mit zwei in Axialrichtung verteilt angeordneten Statorwicklungen.

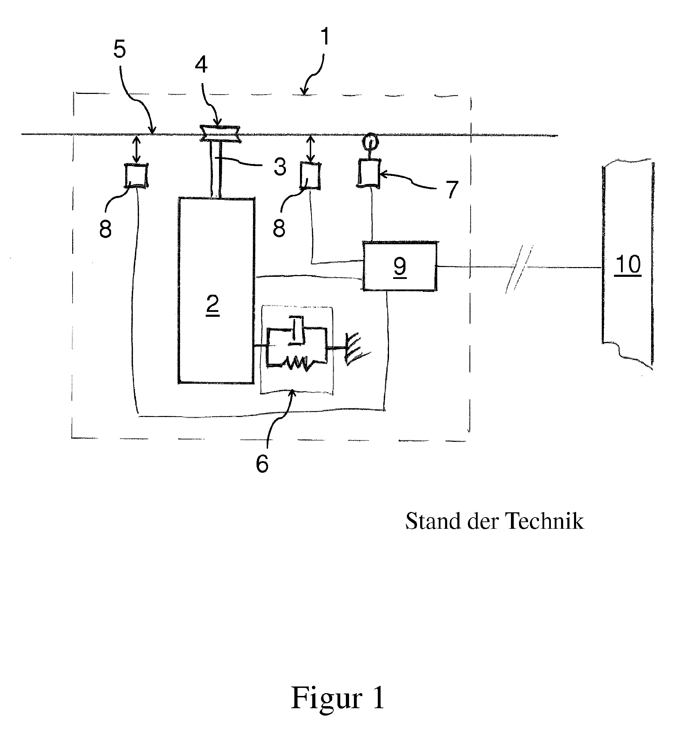

Eine nach dem Stand der Technik ausgeführte Antriebsanordnung 1 für eine Textilmaschine nach Figur 1 weist als wesentliche Komponenten einen rotatorisch wirksamen elektrischen Antrieb 2 mit einer Welle 3 und einen an einem freien Ende der Welle 3 vorgesehenen Manipulator 4 auf. Über den Manipulator 4 wirkt der elektrische Antrieb 2 mit einem Faden 5 zusammen. Der Manipulator 4 ist vorliegend exemplarisch nach Art einer Führungsrolle ausgebildet. Weiter sieht die Antriebsanordnung 1 ein Feder-Dämpfungs-Element 6 vor, über den der elektrische Antrieb 2 zur Umgebung entkoppelt wird. Ein zusätzliches Aktorikelement 7 der Antriebsanordnung 1 dient zum Spannen des Fadens 5. Externe Sensoren 8 dienen beispielsweise zur Erfassung einer Position des Faden 5. Der elektrische Antrieb 2, die Sensoren 8 und das zusätzliche Aktorikelement 7 wirken mit einem dezentralen Kontrollmodul 9 der Antriebsanordnung 1 zusammen. Das dezentrale Kontrollmodul 9 dient als Teil der Antriebsanordnung 1 insbesondere dazu, den elektrischen Antrieb 2 abhängig von den Signalen der externen Sensoren 8 zu betreiben und über das zusätzliche Aktorikelement 7 eine definierte Position und Vorspannung für den Faden 5 bereitzustellen. Das dezentrale Kontrollmodul 9 der Antriebsanordnung 1 ist datentechnisch verbunden mit einer zentralen Kontrolleinrichtung 10, welche ortsfern von der Antriebsanordnung 1 vorgesehen sein kann. Die Zentralkontrolleinrichtung 10 dient insbesondere der Koordination einer Mehrzahl von Antriebsanordnungen 1 in einer Textilmaschine.

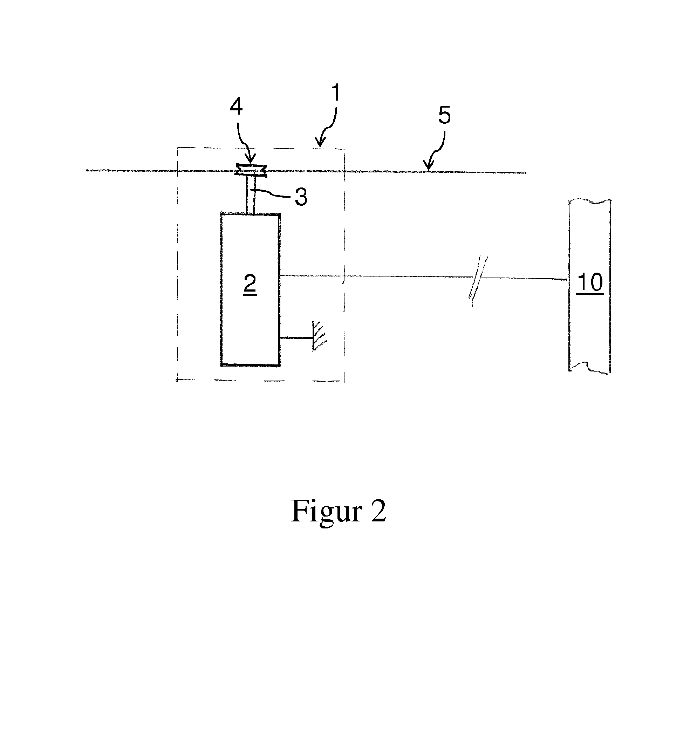

Eine erfindungsgemäße Antriebsanordnung 1 gemäß Figur 2 ist wesentlich kompakter ausgeführt. Insbesondere ist ein funktional erweiterter elektrischer Antrieb 2 vorgesehen, welcher vorzugsweise nach Art eines Synchronmotors 2 realisiert ist. In bekannter Weise kommuniziert ein nicht dargestelltes dezentrales Kontrollmodul der erfindungsgemäßen Antriebsanordnung 1 mit der Zentralkontrolleinrichtung 10. Die Kommunikation kann beispielsweise drahtlos oder kabelgebunden erfolgen. Beispielsweise kann ein Datenbus vorgesehen sein zur Realisierung der Kommunikation zwischen der Zentralkontrolleinrichtung 10 und dem dezentralen Kontrollmodul der in einer Textilmaschine vorgesehenen Antriebsanordnung 1.

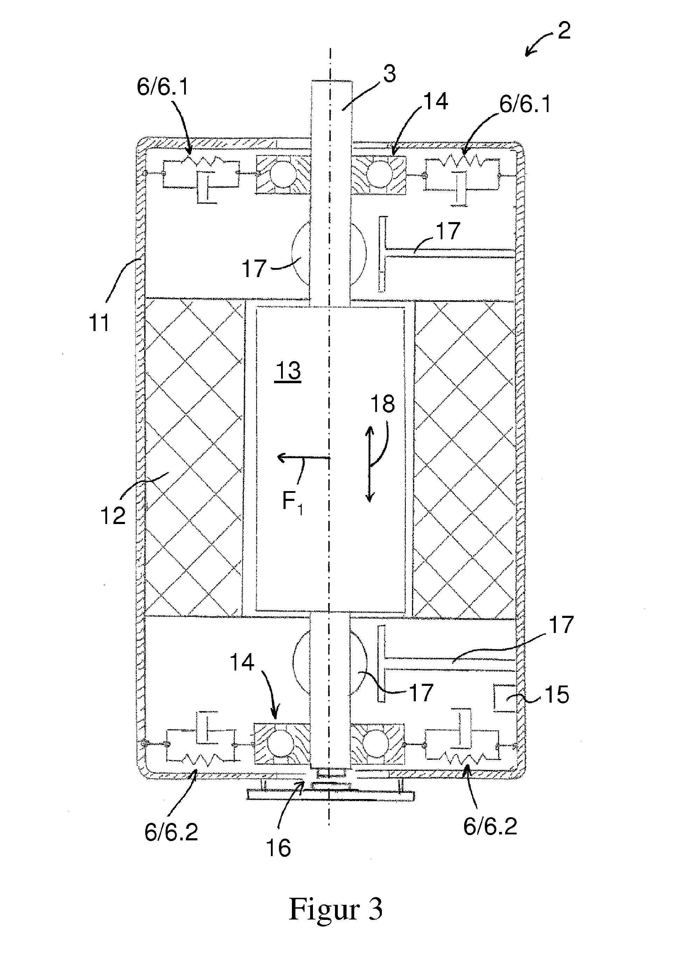

Figur 3 zeigt ein erstes Ausführungsbeispiel des elektrischen Synchronmotors 2 der erfindungsgemäßen Antriebsanordnung 1. Als Teil des Synchronmotors 2 ist ein Gehäuse 11 mit einem in dem Gehäuse 11 vorgesehenen Stator 12 realisiert. Weiter ist die Welle 3 mit einem drehfest an der Welle 3 vorgesehenen Rotor 13 realisiert. Der Rotor 13 ist dem Stator 12 zugeordnet. Die Welle 3 ist über Kugellager 14 sowie Feder-Dämpfungs-Elemente als elastische Mittel 6, 6.1, 6.2 an dem Gehäuse 11 des Synchronmotors 2 abgestützt. Die Kugellager 14 mit den zugeordneten Feder-Dämpfungs-Elementen 6, 6.1, 6.2 sind dabei beabstandet zueinander auf gegenüberliegenden Stirnseiten des Rotors 13 positioniert.

Nach einer alternativen, nicht dargestellten Ausführungsform der Erfindung können statt der Kugellager 14 beliebige andere Wälzlager oder Gleitlager die Welle 3 stützen. Statt der Feder-Dämpfungs-Elemente 6, 6.1, 6.2 können beliebige andere elastische Mittel vorgesehen werden. Insbesondere ist die Realisierung der Bewegungsfähigkeit der Welle 3 in Bezug auf den Stator 12 über Elastomerelemente, Tellerfedern, Blattfedern oder dergleichen beziehungsweise eine Kombination aus Elastomerelementen und Metallfedern darstellbar.

Als Teil der erfindungsgemäßen Antriebsanordnung 1 sind diverse in dem Gehäuse 11 des Synchronmotors 2 vorgesehene Sensorelemente 15, 16, 17 realisiert. Zum einen ist ein dem Gehäuse 11 zugeordneter Beschleunigungssensor 15 realisiert, der insbesondere eine zwei- oder dreidimensionale Beschleunigungsmessung des Gehäuses 11 ermöglicht und dazu dient, die Bewegung des Gehäuses 11 und des mit dem Gehäuse 11 verbundenen Stators 12 zu ermitteln. Weiter ist ein Drehgeber 16 vorgesehen, welcher stirnseitig der Welle 3 zugeordnet ist. Der Drehgeber 16 ermöglicht es, die Rotation beziehungsweise Position der Welle 3 zu ermitteln. Positions- beziehungsweise Wegsensoren 17, welche der Welle 3 auf gegenüberliegenden Seiten des Rotors 13 zugeordnet sind, dienen der Erfassung der Lage der Welle 3. Insbesondere kann mittels der Sensoren 17 eine parallele Verschiebung der Welle 3 mit dem Rotor 13 relativ zum Stator 12 sowie eine Kippung der Welle 3 erfasst werden. Jeweils sind zwei in einer Ebene winkelversetzt zueinander vorgesehene Positions- beziehungsweise Wegsensoren 17 einander paarweise zugeordnet. Es ergibt sich insofern die Möglichkeit, eine Bewegung der Welle 3 in einer radialen Ebene quer zu einer Axialrichtung 18 der Welle 3 zu ermitteln.

Ferner ist als Teil der Antriebsanordnung 1 ein nicht dargestelltes dezentrales Kontrollmodul vorgesehen. Das dezentrale Kontrollmodul ist beispielsweise in dem Gehäuse 11 des Synchronmotors 2 integriert realisiert. Beispielsweise ist das dezentrale Kontrollmodul außerhalb des Gehäuses 11 vorgesehen. Bevorzugt ist das dezentrale Kontrollmodul an dem Gehäuse 11 des Synchronmotors 2 festgelegt. Das dezentrale Kontrollmodul dient insbesondere dazu, einen gesteuerten beziehungsweise geregelten Betrieb des Synchronmotors 2 zu gewährleisten und die erfindungsgemäße Antriebsanordnung 1 in einer übergeordneten Textilmaschine zu betreiben. Das dezentrale Kontrollmodul kommuniziert dazu mit der Zentralkontrolleinrichtung 10 der Textilmaschine. Insbesondere kommuniziert das dezentrale Kontrollmodul mit den Sensoren 15, 16, 17. Das dezentrale Kontrollmodul dient darüber hinaus zum Betrieb des Synchronmotors 2. Insbesondere wird durch das dezentrale Kontrollmodul die Betriebsparameter des Synchronmotors 2 vorgegeben. Der Stator 12, der im vorliegenden Ausführungsbeispiel der Erfindung eine einzige Wicklung aufweist, wird bei einem vorgegebenen Motorstrom betrieben. Das so über den Stator 12 eingeprägte elektrische Wechselfeld weist insbesondere eine Komponente zur Erzeugung des Drehmoments des Synchronmotors 2 auf. Darüber hinaus kann über die Betriebsparameter eine radiale Kraftkomponente F₁ zur Verfügung gestellt werden, welche quer zur Axialrichtung 18 am Rotor 13 angreift. Infolge der radialen Kraftkomponente F₁ und aufgrund der elastischen Lagerung der Welle 3 im Gehäuse 11 ergibt sich eine relative Beweglichkeit der Welle 3 mit dem daran vorgesehenen Rotor 13 in Bezug zum Stator 12 beziehungsweise dem Gehäuse 11 des Synchronmotors 2. Die Welle 3 kann insbesondere parallel verschoben werden in Bezug auf die Axialrichtung 18 beziehungsweise zur Axialrichtung 18 gekippt werden. Es ergibt sich insofern die Möglichkeit, Vibrationen im Antrieb selbst aktiv auszugleichen. Insbesondere werden die Informationen über den Beschleunigungssensor 15 beziehungsweise die Positions- beziehungsweise Wegsensoren 17 verwendet, um Bewegungen des Rotors 13 relative zum Stator 12 und zur Umgebung der Antriebsanordnung 1 zu ermitteln. Darüber hinaus können Relativbewegungen zwischen verschiedenen Antriebsanordnungen 1 der gleichen Textilmaschine bestimmt und ausgeglichen werden. Zusätzlich kann auf den Faden 5 eingewirkt werden. Insbesondere kann über eine radiale Krafteinleitung in den Faden 5 beziehungsweise eine Verkippung der Welle 3 die Fadenspannung beeinflusst werden.

Mittels der erfindungsgemäßen Antriebsanordnung 1 kann zudem eine Fadenspannung bestimmt werden. Beispielsweise kann ein Motorstrom bestimmt werden. Über den Motorstrom kann bei einer Vorspannung des Rotors dieser in einer definierten Position gehalten werden und so in Kenntnis der Position des Motorstroms die Fadenspannung bestimmt werden.

Die Feder-Dämpfungs-Elemente 6, 6.1, 6.2 der erfindungsgemäßen Antriebsanordnung 1 nach Figur 3 können gleich oder verschiedenartig ausgeführt sein. Gleiche Feder-Dämpfungs-Elemente 6, 6.1, 6.2 sind insbesondere konstruktiv und hinsichtlich ihrer Dimensionierung identisch. Verschiedenartige Feder-Dämpfungs-Elemente 6, 6.1, 6.2 unterscheiden sich beispielsweise in Bezug auf die Federkonstante beziehungsweise ihre Dämpfungseigenschaften. Abhängig von der konkreten Dimensionierung der Feder-Dämpfungs-Elemente 6, 6.1, 6.2 sowie den resultierenden Angriffspunkt für die radiale Kraftkomponente F₁ ergibt sich für die verschiedenen Betriebszustände eine individuelle und während des Betriebs beeinflussbare relativ Position für die Welle 3 mit dem darangehaltenen Rotor 13 in Bezug zum Stator 12.

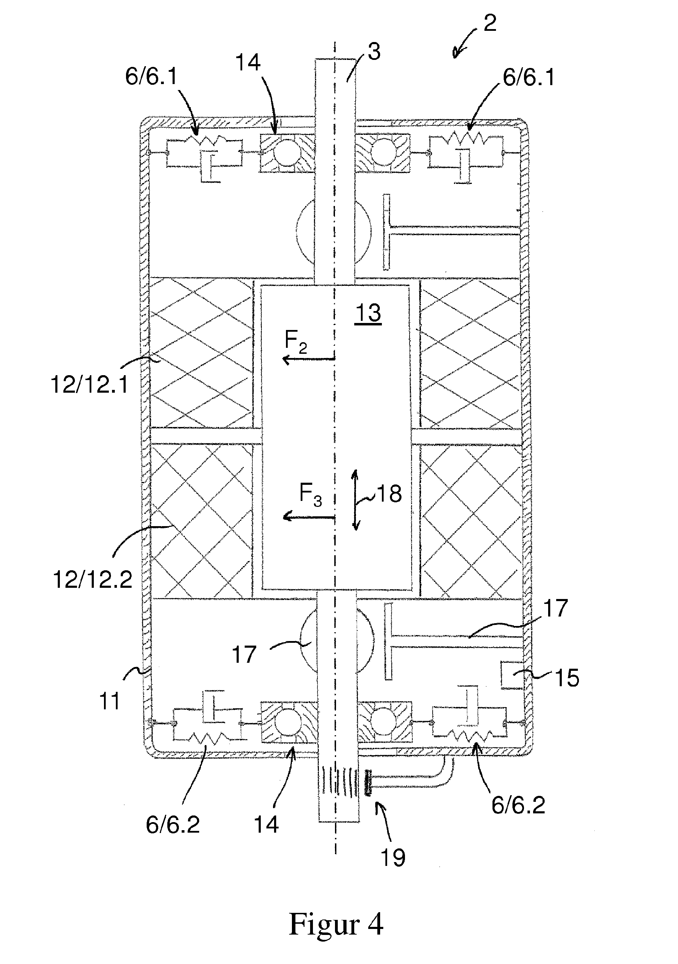

Nach einer zweiten Ausführungsform der erfindungsgemäßen Antriebsanordnung 1 gemäß Figur 4 weist der Synchronmotor 2 einen modifizierten Aufbau auf. Insbesondere dient ein modifizierter Drehgeber 19 der Erfassung der Rotation der Welle 3. Des Weiteren umfasst der Stator 12 zwei in die Axialrichtung 18 beabstandete Wicklungen 12.1, 12.2. Die Wicklungen 12.1, 12.2 des Stators 12 können von dem nicht dargestellten dezentralen Kontrollmodul individuell angesteuert werden. Insbesondere kann in jede Wicklung 12.1, 12.2 ein individuelles elektrisches Wechselfeld eingeprägt werden. Insofern können neben der Bereitstellung des Drehmoments in die Axialrichtung 18 beabstandet eine erste radiale Kraftkomponente F₂ und eine zweite radiale Kraftkomponente F₃ eingeprägt werden. Die erste radiale Kraftkomponente F₂ ist dabei der ersten Wicklung 12.1 und die zweite radiale Kraftkomponente F₃ der Wicklung 12.2 zugeordnet. Durch das Vorsehen der zwei radialen Kraftkomponente F₂, F₃ kann die relative Lage der Welle 3 mit dem Rotor 13 relativ zum Stator 12 individuell eingestellt werden. Insbesondere ergibt sich die Möglichkeit, die Welle 3 parallel zu verschieben beziehungsweise in Bezug zur Axialrichtung 18 zu verkippen, um so die Vorspannung und Lage des Fadens 5 zu beeinflussen. Die Feder-Dämpfungs-Elemente 6, 6.1, 6.2 können gleich oder verschiedenartig ausgeführt sein.

Gleiche Bauteile und Bauteilfunktionen sind durch gleiche Bezugszeichen gekennzeichnet.

## Patentansprüche

1. Textilmaschine mit wenigstens einer Antriebsanordnung (1) umfassend
- einen rotatorisch wirksamen elektrischen Antriebsmotor (2) mit einem jedenfalls abschnittsweise von einem Gehäuse (11) des Antriebsmotors (2) umfassten Stator (12), welcher wenigstens eine Wicklung (12.1, 12.2) aufweist, mit einem an einer Welle (3) des Antriebsmotors (2) drehbar in Bezug zum Stator (12) gehaltenen Rotor (13) und mit mindestens einem Lager (14) für die Welle (3),
- elastische Mittel (6, 6.1, 6.2) zum Stützen von wenigstens einzelnen Funktionskomponenten des Antriebsmotors (2),
- ein dem Antriebsmotor (2) zugeordnetes dezentrales Kontrollmodul, welches mit dem Antriebsmotor (2) einerseits und mit mindestens einem Sensor (8, 15, 16, 17) der Antriebsanordnung (1) andererseits zusammenwirkt und welches Mittel zur Kommunikation mit einer übergeordneten Zentralkontrolleinrichtung (10) aufweist,
**dadurch gekennzeichnet, dass** mindestens ein zum Stützen der Welle (3) vorgesehenes Lager (14) über die elastischen Mittel (6, 6.1, 6.2) nachgiebig in Bezug zu dem Stator (12) an dem Gehäuse (11) abgestützt ist derart, dass die Welle (3) mit den Rotor (13) relativ zu dem Stator (12) beweglich gehalten ist, dass als Antriebsmotor (2) ein elektrischer Synchronmotor vorgesehen ist und dass über einen ersten Sensor (17) eine Position der Welle (3) relativ zu dem Gehäuse (11) und/oder über einen zweiten Sensor (16) ein Drehwinkel der Welle (3) erfassbar sind.

2. Textilmaschine nach Anspruch 1, **dadurch gekennzeichnet, dass** der Stator (12) wenigstens zwei in eine Axialrichtung (18) der Welle (3) beabstandet vorgesehene Wicklungen (12.1, 12.2) aufweist und dass die wenigstens zwei Wicklung (12.1, 12.2) derart mit dem dezentralen Kontrollmodul zusammenwirken, dass für jede Wicklung (12.1, 12.2) individuelle elektrische Betriebsparameter einstellbar sind.

3. Textilmaschine nach Anspruch 1 oder 2, **dadurch gekennzeichnet, dass** ein Manipulator (4) vorgesehen ist zum mechanischen Einwirken auf eine Faser und/oder ein Faden (5) und/oder ein Vlies und/oder ein Gewirk, wobei der Manipulator (4) drehfest und insbesondere endseitig außerhalb des Gehäuses (11) an der Welle (3) gehalten ist.

4. Textilmaschine nach einem der Ansprüche 1 bis 3, **dadurch gekennzeichnet, dass** das dezentrale Kontrollmodul Mittel zur Erfassung eines Motorstroms im Stator (12) vorsieht, wobei bevorzugt der Motorstrom separat für jede Wicklung (12.1, 12.2) des Stators (12) erfassbar ist.

5. Textilmaschine nach einem der Ansprüche 1 bis 4, **dadurch gekennzeichnet, dass** mindestens einem Lager (14) der Welle (3) als elastisches Mittel (6, 6.1, 6.2) Feder-Dämpfungs-Elemente zugeordnet sind, und/oder dass die elastischen Mittel (6, 6.1, 6.2) dem wenigstens einem Lager (14) in eine Umfangsrichtung verteilt zugeordnet sind.

6. Textilmaschine nach einem der Ansprüche 1 bis 5, **dadurch gekennzeichnet, dass** die elastischen Mittel (6, 6.1, 6.2) ringförmig ausgebildet sind und/oder dass einem Lager (14) der Welle (3) mindestens drei in die Umfangsrichtung gleichmäßig verteilt angeordneten elastischen Mittel (6, 6.1, 6.2) zugeordnet sind.

7. Textilmaschine nach einem der Ansprüche 1 bis 6, **dadurch gekennzeichnet, dass** Elastomerelemente als elastische Mittel (6, 6.1, 6.2) vorgesehen sind.

8. Textilmaschine nach einem der Ansprüche 1 bis 7, **dadurch gekennzeichnet, dass** die Welle (3) von wenigstens zwei in die Axialrichtung (18) beabstandeten Lagern (14) gestützt ist.

9. Textilmaschine nach einem der Ansprüche 1 bis 8, **dadurch gekennzeichnet, dass** den zwei in die Axialrichtung (18) beabstandeten Lagern (14) der Welle (3) verschiedenartige elastische Mittel (6, 6.1, 6.2) zugeordnet sind derart, dass sich die verschiedenartigen elastischen Mittel (6, 6.1, 6.2) in Bezug auf eine Federkonstante und/oder in Bezug auf die Dämpfungseigenschaften unterscheiden.

10. Textilmaschine nach einem der Ansprüche 1 bis 9, **dadurch gekennzeichnet, dass** eine Mehrzahl von Antriebsanordnungen (1) vorgesehen ist und dass die dezentralen Kontrollmodule der Antriebsanordnungen (1) mit der Zentralkontrolleinrichtung (10) über die Mittel zur Kommunikation derart verbunden sind und zusammenwirken, dass die Antriebsanordnungen (1) zur mechanischen Einwirkung auf den Faden (5), die Faser, das Vlies und/oder das Gewirk koordiniert betrieben werden.
